Europäisches Patentamt

European Patent Office

Office européen des brevets

(11) Veröffentlichungsnummer: **0 248 829**
**B1**

(12) # EUROPÄISCHE PATENTSCHRIFT

(45) Veröffentlichungstag der Patentschrift:
**31.01.90**

(51) Int. Cl.⁴: **H 05 B 7/152**

(21) Anmeldenummer: **86906785.0**

(22) Anmeldetag: **29.11.86**

(86) Internationale Anmeldenummer:
**PCT/DE 86/00487**

(87) Internationale Veröffentlichungsnummer:
**WO 87/03772 (18.06.87 Gazette 87/13)**

(54) **EINRICHTUNG ZUM REGELN EINER SCHMELZELEKTRODE.**

(30) Priorität: **13.12.85 DE 3544005**

(43) Veröffentlichungstag der Anmeldung:
**16.12.87 Patentblatt 87/51**

(45) Bekanntmachung des Hinweises auf die Patenterteilung:
**31.01.90 Patentblatt 90/5**

(84) Benannte Vertragsstaaten:
**AT DE FR GB IT SE**

(56) Entgegenhaltungen:
**DE-A- 1 815 359**
**DE-A- 3 000 996**
**DE-A- 3 020 336**
**DE-B- 1 169 604**
**US-A- 3 143 587**
**US-A- 3 872 231**
**US-A- 4 303 797**
**US-A- 4 578 795**

(73) Patentinhaber: **LEYBOLD AKTIENGESELLSCHAFT,
Wilhelm-Rohn-Strasse 25, D-6450 Hanau am Main 1 (DE)**

(72) Erfinder: **STENZEL, Otto, Vonhäuserstrasse 50,
D-6466 Gründau 4 (DE)**
Erfinder: **THOMAS, Friedrich-Werner,
Schwarzwaldweg 2, D-6460 Gelnhausen 2 (DE)**

(74) Vertreter: **Schickedanz, Willi, Dipl.-Ing., Langener
Strasse 68, D-6050 Offenbach/Main (DE)**

## Beschreibung

Die Erfindung betrifft eine Einrichtung zum Regeln des Abstands einer Schmelzelektrode zur Oberfläche des Schmelzguts in einem Vakuumlichtbogenofen, gemäß Oberbegriff von Patentanspruch 1.

Für die Erzeugung hochwertiger Metalle und Metallegierungen, die möglichst wenig Fremdkörpereinschlüsse aufweisen und in ihrer Struktur homogen sind, sind verschiedene Verfahren bekannt. Eines der bekanntesten Verfahren ist das Lichtbogenschmelzen, bei dem sich eine Elektrode zu einem Tiegel erstreckt und durch Anlegen einer elektrischen Spannung zwischen Elektrode und Tiegel die Elektrode an ihrer Spitze abschmilzt und als flüssiges Material in den Tiegel fällt. In der Regel wird die sogenannte Schmelzelektrode an den einen Pol einer Gleichspannung und der Tiegel an den anderen Pol dieser Gleichspannung gelegt. Es sind jedoch auch Überlagerungen mit Wechselspannungen möglich, um bestimmte Effekte zu erzielen.

Ein Hauptproblem beim Betrieb von Lichtbogenschmelzöfen der vorstehend genannten Art besteht darin, die Lichtbogenlänge zu regeln, d.h. den Abstand zwischen dem unteren Ende der Elektrode und der Oberfläche des bereits in dem Tiegel befindlichen Schmelzguts. Ist der Lichtbogen zu lang, so können die Elektrode und/oder das Schmelzgut falsch aufgeheizt werden, so daß die Qualität des Schmelzguts stark vermindert wird. Da sich einerseits der Pegel des Schmelzguts in dem Tiegel fortwährend erhöht und andererseits der Abstand zwischen dem Ende der Elektrode und der Oberfläche des Tiegels während des Betriebs nicht unmittelbar beobachtet werden kann, müssen besondere Maßnahmen getroffen werden, um diesen Abstand zu regeln.

Bei Lichtbogenschmelzöfen, die bei Atmosphärendruck oder nur geringfügig darunter arbeiten, wird die Lichtbogenlänge dadurch geregelt, daß man eine vorgegebene Lichtbogenspannung aufrechterhält. Bei Atmosphärendruck ist der Plasmabogen dadurch gekennzeichnet, daß er einen bestimmten Spannungsgradienten aufweist, z.B. 20 Volt pro 2,5 cm. Die Spannungsabfälle an der Katode und an der Anodenoberfläche machen zusammen zusätzliche 20 Volt aus, so daß man dann, wenn man eine Lichtbogenlänge von z.B. 1,25 cm aufrechterhalten will, die Elektrode in eine solche Position bringt, daß die Bogenspannung bei 30 V liegt. Dies kann leicht mittels herkömmlicher Einrichtungen realisiert werden, welche die Bogenspannung messen und regeln.

Bei Lichtbogenschmelzöfen, die im Vakuum arbeiten, kann das vorstehend beschriebene Verfahren indessen nicht immer angewendet werden. Derartige Lichtbogenschmelzöfen werden insbesondere zum Schmelzen der sogenannten refraktorischen aktiven Metalle wie Titan oder Zirkon sowie für die Herstellung rostfreier Stähle und Hochtemperaturlegierungen verwendet. Wenn der Gasdruck, der den Lichtbogen umgibt, abnimmt, nimmt auch der Spannungsgradient des Bogenplasmas ab, und bei sehr niedrigen Drücken kann der Spannungsgradient des Bogenplasmas beispielsweise nur noch ein Volt pro 2,5 cm betragen. Da die Anoden- und Katodenspannungsabfälle z.B. bei Stahl bei ungefähr 20 Volt liegen, ist der Spannungsabfall am Lichtbogen, verglichen mit den übrigen Spannungsabfällen, sehr klein. Änderungen im Gasgehalt und der Legierungszusammensetzung beeinflußen den Anoden- und Kathodenspannungsabfall in der Größenordnung des Spannungsabfalls in der «Lichtbogensäule». Demzufolge ist das Verfahren, den Lichtbogen durch Konstanthalten der Lichtbogenspannung zu regeln, vor allem bei Stählen, mit großen Fehlern behaftet; d.h. die tatsächliche Länge des Lichtbogens wird in der Regel stark von der gewünschten Länge abweichen.

Es ist indessen bereits ein Lichtbogenschmelzofen bekannt, der zur Regelung des Abstands zwischen Elektrode und Schmelzgutoberfläche von der Erkenntnis Gebrauch macht, daß die Spannung sogar bei ordnungsgemäßem Betrieb in bestimmten Zeitabständen kurzfristig zusammenbricht (US-A-2 942 045). Dieser Effekt wird durch Kurzschlüsse verursacht, die durch flüssige Metalltropfen entstehen, die von der Elektrode in den Tiegel tropfen und kurzzeitig die Elektrode mit dem Schmelzgut im Tiegel elektrisch leitend verbinden. Solange die Dauer und die Frequenz dieser Kurzschlüsse nicht sehr groß sind, arbeitet der Lichtbogen mit nahezu voller Leistung, so daß keine wesentliche Beeinflußung der Schmelzgut-Aufheizung stattfindet. Wird der Lichtbogen kürzer, so nimmt die Häufigkeit der Bogenkurzschlüsse zu.

Gemäß dem bekannten Lichtbogenschmelzofen wird der Elektrodenabstand in der Weise geregelt, daß die Häufigkeit der Bogenkurzschlüsse innerhalb eines bestimmten Bereichs gehalten wird. Hierbei wird beispielsweise ein Voltmeter beobachtet, und es werden mit einer Stoppuhr die Zeitabstände zwischen den einzelnen Spannungseinbrüchen gemessen, damit die Spannungseinbrüche pro Zeiteinheit ermittelt werden können.

Eine andere bekannte Einrichtung zur Regelung des Elektrodenabstands in einem Lichtbogenschmelzofen geht von der Erkenntnis aus, daß der Lichtbogenspannung Spannungsschwankungen in Form von positiv ansteigenden Impulsen überlagert sind, von denen jeder während einer kurzen Zeitspanne von beispielsweise 40 Millisekunden mit einer Frequenz von 30 Hz auftritt (DE-B-1 212 651). Diese Spannungsimpulse, über deren Ursache nichts ausgesagt ist, werden dazu benutzt, den Elektrodenabstand zu regeln, wobei der Spannungsverlauf in eine Grundkomponente und eine zweite Komponente aufgespalten wird. Die in der zweiten Komponente als Spannungs-, Strom- oder Impedanzschwankungen auftretenden impulsförmigen Schwankungen werden hierbei nachgewiesen, und der Elektrodenabstand wird in Abhängigkeit von der Folgefrequenz dieser Schwankungen geregelt. Es wird also eine Impulszählung der Überspannungen pro Zeiteinheit vorgenommen und bei zu geringer Impulszahl die Elektrode abgesenkt.

Bei einer anderen bekannten Vorrichtung zum Bogenschmelzen wird von oszilloskopischen oder -graphischen Beobachtungen ausgegangen, die zeigen, daß während des Schmelzens von Metallen im Vakuum kurzzeitige Kurzschlüsse von 0,1 bis 0,3 Sekunden zwischen der Elektrode und der geschmolzenen Metalloberfläche des Tiegels auftreten. Zusätzlich wird berücksichtigt, daß Änderungen in der Lichtbogenspannung auftreten, die sich durch Verunreinigungen ergeben, welche ihrerseits auf Änderungen in der Zusammensetzung oder im Druck einer inaktiven Gasatmosphäre beruhen oder durch das Ausschlagen eines Lichtbogens von der Elektrode zur Tiegelwand bedingt sind, wobei diese letztgenannten Spannungsänderungen kleiner sind als die Spannungsänderungen, die auftreten, wenn Tropfen vom geschmolzenem Metall die Elektrode mit dem geschmolzenen Metallband verbinden (US-A-2 915 572). Diese bekannte Vorrichtung weist eine Einrichtung auf, mit welcher die Elektrode in Richtung auf die Oberfläche des im Tiegel befindlichen Metalls um einen Betrag bewegt wird, der mindestens gleich der Differenz der Schmelzrate der Elektrode und der Anstiegsrate der Metalloberfläche ist. Die Vorrichtung weist außerdem Einrichtungen auf, die aufgrund geschmolzener Tropfen zwischen der Elektrode und der Metalloberfläche in einer vorgegebenen Position der Elektrode in Bezug zu der Metalloberfläche aktiviert werden, um die Elektrode von der Metalloberfläche weg in eine bestimmte Entfernung zu bewegen. Die Spannungskurzschlüsse werden hierbei durch ein Relais erfaßt, das ein Zeitmeßgerät steuert.

Weiterhin ist in der nicht vorveröffentlichten US-A-4 578 795 eine Vorrichtung für die Regelung des Elektrodenabstands beschrieben, bei welcher die Tropfenkurzschlüsse zwischen der Elektrode und der flüssigen Metalloberfläche des Tiegels als Regelkriterium herangezogen wird. Die Tropfenkurzschlüsse und die zugeordneten Spannungsreduktionen erscheinen hierbei als sich wiederholende Impulse, die eng mit dem Elektrodenabstand korrelieren. Die Zahl der Tropfenkurzschlüsse wird aufsummiert und jedesmal dann, wenn die Zahl der Kurzschlüsse einen vorgegebenen Wert erreicht hat, werden die mittlere Periode zwischen den Kurzschlüssen, und zwar ausgehend von diesem vorgegebenen Wert, sowie die Zeit, in welcher dieser Wert erreicht wird, errechnet. Für diese Berechnung und für die Anzeige der Dauer jedes Kurzschlusses wird ein Mikroprozessor verwendet. Es wird hierbei unmittelbar nach der Impulsformung der natürlichen Tropfen-Kurzschlüsse digital mit einem Rechner gearbeitet. Die normierten Impulse werden einem Ereignis-Register zugeführt, wobei die einzuzählende Impulsmenge vorher über ein Rechner-Bedienpult eingegeben und fallweise geändert werden kann. Unterschreitet der Inhalt des Ereignis-Registers die festgelegte Impulszahl, was durch Koinzidenz festgestellt wird, so erfolgt ein Befehl an ein Zeitmeßgerät, und die abgelaufene Zeit zwischen den jeweiligen Koinzidenzen wird ausgelesen. Dieser Wert dient als Maßstab für den Abstand zwischen Elektrode und flüssiger Metalloberfläche. Der Meßwert wird jeweils nach Erreichen der vorgegebenen Anzahl von Tropfenkurzschlüssen (ca. 100 Kurzschlüsse) erneuert. Eine solche Vorrichtung beinhaltet zwei Nachteile, nämlich daß der Meßwert erst nach relativ langen Zeitabschnitten aufgefrischt wird, also nicht aktuell ist, und daß dann, wenn wenig oder gar keine Tropfen auftreten, die Zeit bis zu einem Regeleingriff sehr lang wird. Bei hoher Tropfenzahl ist der Regeleingriff dagegen sehr schnell. Die Ermittlungszeiten für die Tropfenzahl stellen eine Totzeit dar. Diese Totzeit ist für unterschiedliche Betriebszustände unterschiedlich lang. Das Zeitverhalten des Meßglieds ist nicht-linear. Die Phasendrehung des Signals ist somit von dem augenblicklichen Betriebszustand abhängig. Die Größe des Regeleingriffs bei einer Abweichung vom Sollwert muß stark eingeschränkt werden, um ein Schwingen zu vermeiden. Es muß also eine kleine Kreisverstärkung gewählt werden. Dies bedingt eine träge Störgrößen-Regelung mit großen Abweichungen vom Sollwert.

Schließlich sind noch ein weiteres Verfahren und eine Vorrichtung zum Steuern der Elektrodenantriebsgeschwindigkeit in einem Lichtbogenofen bekannt, bei denen die Zeit zwischen zwei aufeinanderfolgenden Tropfenkurzschlüssen gemessen und die mittlere Zeit zwischen einer vorgegebenen Anzahl der zurückliegenden Kurzschlüsse errechnet wird (US-A-4 303 797). Beispielsweise wird das Zeitintervall zwischen den zehn letzten Kurzschlüssen berechnet und als Istwert einem Regler zugeführt. Das Übergangsverhalten dieser Einrichtung bei Signaländerungen ist jedoch nachteilig.

Der Erfindung liegt deshalb die Aufgabe zugrunde, eine Einrichtung zu schaffen, mit der es möglich ist, eine verbesserte Elektrodenregelung zu erreichen.

Diese Aufgabe wird durch die Merkmale des Patentanspruchs 1 gelöst.

Der mit der Erfindung erzielte Vorteil besteht insbesondere darin, daß der Elektroden-Regler nicht nur sehr scharf eingestellt werden kann, sondern daß es auch möglich ist, eine sehr schnelle Regelung mit nur geringen Abweichungen vom Sollwert zu erzielen. Die Erfindung optimiert auf diese Weise den geschlossenen Regelkreis, der gegenüber einem offenen Regelkreis den Nachteil aufweist, daß erst eine Regelabweichung auftreten muß, bis der Regler über eine Stellgröße überhaupt eine Korrektur vornehmen kann. In der allgemeinen Regeltechnik wird dieser Nachteil meistens durch eine sogenannte Regelung mit Störgrößenaufschlag zu beseitigen versucht. Hierbei wird eine Störgröße gemessen und über einen Hilfsregler dem Stellglied zugeführt. Bei Auftreten einer Störgröße wird sofort ein Korrektursignal erzeugt, ohne daß erst eine Regelabweichung abzuwarten ist. Dieser Zweig stellt, von der Störgröße her gesehen, eine offene Kette, also eine Steuerung dar mit all deren Nachteilen.

Unter einer Tropfenrate wird die Zahl der Tropfenkurzschlüsse innerhalb einer gewissen Zeit verstanden, während mit Tropfenfolge die Zeit zwischen zwei Tropfenkurzschlüssen gemeint ist. Obwohl die Tropfenrate und die Tropfenfolge Kehrwerte zueinander sind, ist es im vorliegenden Fall nicht gleichgültig, ob zuerst eine Mittelwertbildung und dann eine Kehrwertbildung vorgenommen wird oder umgekehrt, denn die Mittelwertbildung ist ein Additionsvorgang, während die Kehrwertbildung ein Multiplikationsvorgang ist. Folglich ist der arithmetische Mittelwert einer Summe von Zeiten nicht gleich dem Kehrwert eines arithmetischen Mittelwerts einer Summe von Raten, d.h. Summe der Kehrwerte der Zeiten. Dieser Unterschied wirkt sich regelungstechnisch insofern aus, als das Übergangsverhalten bei Signaländerungen, d.h. das sogenannte transiente Verhalten, bei der erfindungsgemäßen Lösung entscheidend verbessert wird. Die Totzeit ist bei der Einrichtung nach der Erfindung stets gleich lang.

Ein Ausführungsbeispiel der Erfindung ist in der Zeichnung dargestellt und wird im folgenden näher beschrieben. Es zeigen:

Fig. 1 den Spannungsverlauf bzw. den Stromverlauf bei einem typischen Tropfenkurzschluß;

Fig. 2 eine bekannte Regelschaltung für den Vorschub einer Elektrode in einem Schmelztiegel;

Fig. 3 eine erfindungsgemäße Schaltungsanordnung für die Tropfenkurzschlußregelung in einer Schmelzelektroden-Verbindung in Analogtechnik;

Fig. 4 eine erfindungsgemäße Schaltungsanordnung entsprechend Fig. 3, jedoch in Digitaltechnik;

Fig. 5a eine grafische Darstellung, welche die funktionelle Abhängigkeit zwischen Spaltbreite und Tropfenfolge zeigt;

Fig. 5b eine grafische Darstellung, welche die funktionelle Abhängigkeit zwischen Spaltbreite und Tropfenrate zeigt.

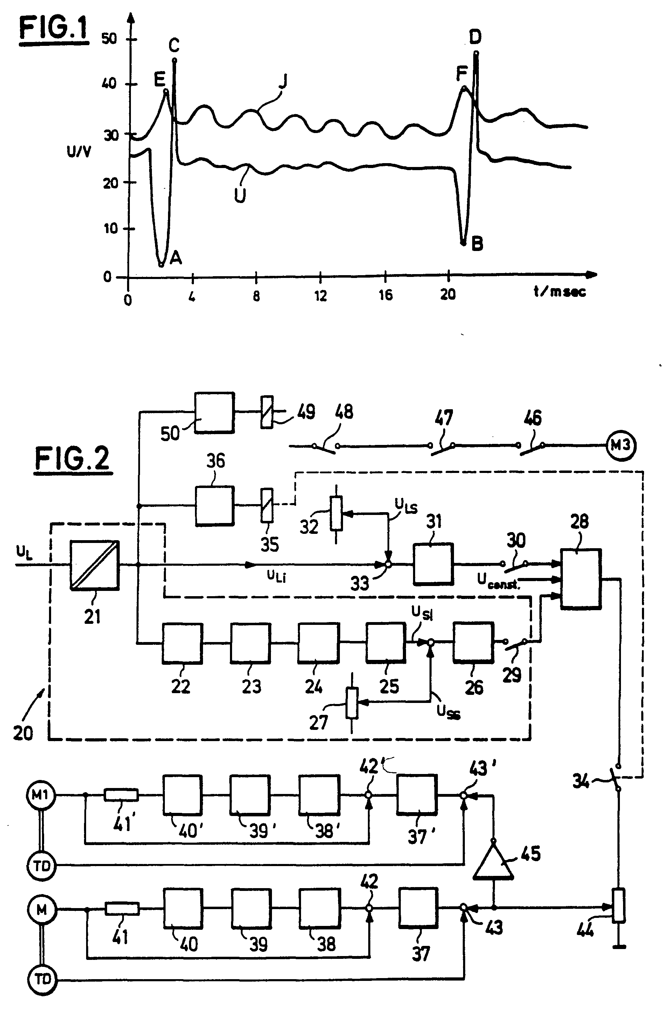

In der Fig. 1 ist dargestellt, in welcher Weise sich Strom und Spannung verändern, die zwischen einer Schmelz-Elektrode und einem Tigel anstehen bzw. diese Strecke durchfließen. Man erkennt hierbei, daß bei einem Gleichstrom, dem ein Wechselstrom mit geringer Amplitude überlagert ist, die Spannung U im allgemeinen konstant bleibt und nur in den Punkten A, B ein Minimum bzw. in den Punkten C, D ein Maximum hat. Wenn die Spannung U ein Minimum hat, dann besitzt der Strom ein Maximum, vergl. die Punkte E und F.

Die Spannungseinbrüche in den Punkten A und B deuten jeweils einen Kurzschluß an, der durch einen Tropfen flüssigen Metalls hervorgerufen wird, der die Elektrode mit der Oberfläche des geschmolzenen Metalls im Tiegel kurzzeitig verbindet.

In der Fig. 2 ist eine bekannte Schaltungsanordnung dargestellt, die für die Tropfen-Kurzschlußregelung geeignet ist. Anhand dieser bekannten Schaltungsanordnung lassen sich die Unterschiede und Vorteile der Erfindung besser verständlich machen. Die eigentliche Tropfen-Kurzschlußregelung (= Drop-short-Regelung) ist hierbei mit der Bezugszahl 20 bezeichnet. Sie enthält mehrere Bauelemente und arbeitet wie folgt: Nach der galvanischen Trennung der Lichtbogenspannung $U_L$ durch einen Trennwandler 21 werden über ein Differenzierglied 22 die Spannungseinbrüche aufgrund der Tropfen-Kurzschlüsse ausgefiltert. Die Grenzfrequenz des Differenzierglieds 22 ist dabei so ausgelegt, daß die Kurzschlüsse einwandfrei erfaßt werden können. In der nachfolgenden Triggerschaltung 23 werden die ausgefilterten Impulse formiert und in einer nachfolgenden monostabilen Kippstufe 24 in Normimpulse, d.h. in Impulse konstanter Amplitude und Breite, umgewandelt.

Ein Integrator, genauer ein PT$_1$-Glied 25 mit fester Integrationszeit, bildet den Impulsmittelwert aus den anfallenden normierten Impulsen. Die Ausgangsgröße dieses Integrators 25 stellt den Kurzschlußhäufigkeits-Istwert $U_{si}$ dar, der mit einem an einem Potentiometer 27 abgegriffenen Kurzschlußhäufigkeits-Sollwert $U_{ss}$ verglichen und als Differenz dem Kurzschlußhäufigkeitsregler 26 zugeführt wird. Das entsprechende digitale Analogon hierzu wäre das Einzählen von Impulsen in einen digitalen Zähler mit fester Zeitbasis und das Auswerten des jeweils innerhalb eines festen Zeitintervalls anfallenden Impulszählerstands. Es wird also die Anzahl der anfallenden Tropfen-Kurzschlüsse innerhalb einer festgelegten Zeit gezählt. Als Mittelwertbildner käme also ein Ringzähler in Frage, der den Mittelwert über alle in der Ringzeit erfaßten Kurzschlüsse ermittelt. Die übrigen Schaltungsteile der Fig. 2 haben mit der eigentlichen Kurzschlußhäufigkeitsregelung nichts zu tun, obgleich sie für die Gesamtregelung erforderlich sind. Sie berücksichtigen andere Einflußgrößen auf die Regelung, denn die Tropfen-Kurzschlüsse sind nur eines von mehreren möglichen Regelkriterien, was durch das Summationsglied 28 zum Ausdruck kommt. Neben einer konstanten Spannung $U_{const}$ kann beispielsweise die Ausgangsgröße des Kurzschlußhäufigkeitsreglers 26 über einen Schalter 29 zugeschaltet werden. Ferner kann das Summationsglied 28 zusätzlich über einen Schalter 30 mit der Ausgangsgröße eines allgemeinen Lichtbogenspannungsreglers 31 beaufschlagt werden. Diesem Lichtbogenspannungsregler 31 wird die Differenz zwischen dem Lichtbogenspannungsistwert $U_{Li}$ und einem Lichtbogenspannungssollwert $U_{LS}$, der von einem Potentiometer 32 abgegriffen wird, über ein Verknüpfungselement 33 zugeführt. Die Ausgangsgröße dieses Summationsglieds 28 ist über einen steuerbaren Schalter 34 mit Motorreglern verbunden. Der Schalter 34 kann hierbei über ein Relais 35 gesteuert werden, das durch eine Spannung ausgelöst wird, die durch einen Gas-Detektor 36 erzeugt wird. Die erwähnten Motorregler steuern zwei Motoren M 1 bzw. 2, die für das Differenzialgetriebe der Elektrode vorgesehen sind. Diese Motorregler sind vom selben Typ und weisen jeweils einen P-Regler 37 bzw. 37', einen I-Regler 38 bzw. 38', ein Impuls-Gerät 39, 39' einen Gleichrichter 40, 40'und einen Widerstand auf, wobei der Ausgang des Widerstands 41, 41' auf ein Verknüpfungselement 42, 42' rückgeführt ist, das zwischen dem P-Regler 37, 37' und dem I-Regler 38, 38' liegt. Ferner ist die Ausgangsgröße eines Tachodynamos TD$_1$ bzw. TD$_2$ auf ein Verknüpfungselement 43 bzw. 43' rückgeführt, wobei das Verknüpfungselement 43 zwischen den Abgriff eines Potentiometers 44 und den P-Regler 37 angeschlossen ist, während das Verknüpfungselement 43' zwischen den Ausgang eines Umkehrverstärkers 45, der ebenfalls am Abgriff des Potentiometers 44 liegt, und dem P-Regler 37' angeschlossen ist. Ein weiterer Motor M 3 des Differentialgetriebes der Elektroder ist über Schalter 46, 47, 48 zuschaltbar, wobei der Schalter 48 von einem Relais 49 gesteuert wird, das seinerseits von einer Kurzschlußauflöseschaltung 50 angesteuert wird.

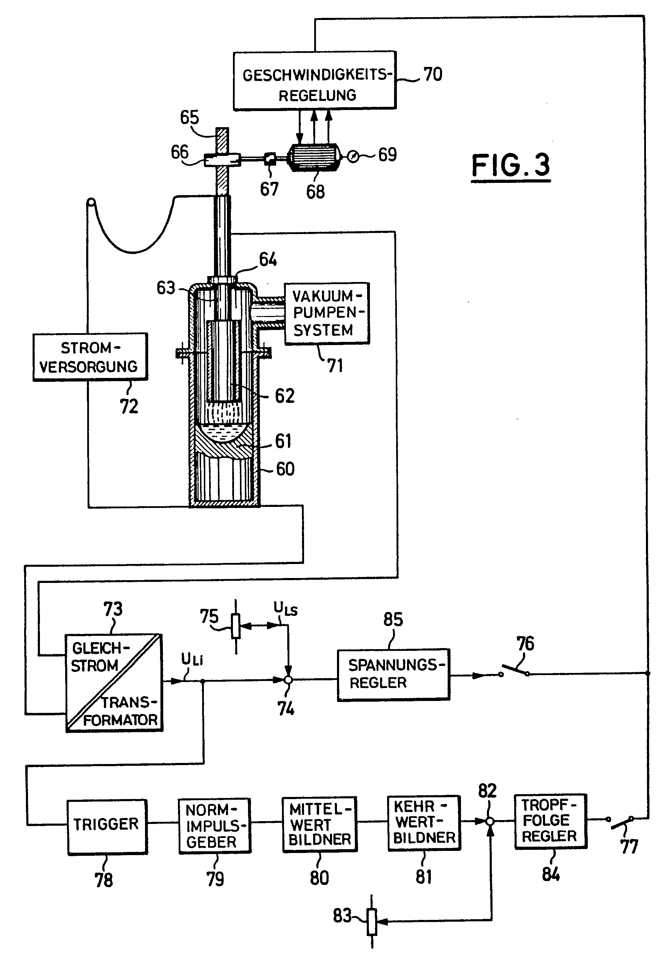

In der Fig. 3 ist eine erfindungsgemäße Schaltungsanordnung dargestellt, die in einigen Einzelheiten der Anordnung nach Fig. 2 entspricht. Die eigentliche Tropfenregelung geschieht jetzt jedoch auf andere Weise. Zur Veranschaulichung ist außer der erwähnten Schaltungsanordnung auch der Schmelztiegel 60 gezeigt, in dem sich das Schmelzgut 61, z.B. geschmolzenes Metall bzw. eine geschmolzene Metallegierung, befindet. Über diesem Schmelzgut 61 ist eine Schmelzelektrode 62 angeordnet, die an einer Haltestange 63 befestigt ist, welche durch eine Öffnung in den Schmelztiegel ragt und dort mittels eines Flansches 64 arretiert ist. Der aus dem Tiegel 60 herausragende Teil der Haltestange 63 ist mit einem Gewinde 65 versehen, das durch eine Antriebsmutter 66 geführt ist. Diese Antriebsmutter 66 steht mit einem Getriebe 67 in Verbindung, das seinerseits mit einem Motor 68 gekoppelt ist, der einen Tachogenerator 69 antreibt. Eine Geschwindigkeits-Regeleinrichtung 70 beaufschlagt den Motor 68 und wird ihrerseits von Signalen des Tachogenerators 69 beaufschlagt. An dem Schmelztiegel 60 befindet sich ein Vakuum-Pumpensystem 71, welches das Innere des Schmelztiegels 60 auf einem vorgegebenen geringen Druck hält. Zwischen dem Boden des Schmelztiegels 60 und der Haltestange 63 der Elektrode 62 ist eine Stromversorgung 72 angeschlossen, welche zwischen dem Ende der Elektrode und der Oberfläche des Schmelzguts 61 eine Spannung anlegt, die sogenannte Lichtbogenspannung. Der Istwert der Lichtbogenspannung wird auf einen Gleichstromtransformator 73 gegeben, dessen Ausgangssignal $U_{Li}$ einem Verknüpfungselement 74 zugeführt ist, welches auch den Lichtbogensollwert $U_{LS}$ erhält, der von einem Potentiometer 75 abgegriffen wird.

Die Differenz zwischen dem Ist- und dem Sollwert der Lichtbogenspannung wird einem Spannungsregler 85 zugeführt, der über einen Schalter 76 ein Regelsignal auf die Geschwindigkeitsregelung 70 gibt. Die eigentliche Tropfenfolgeregelung wird über einen anderen Schalter 77 auf die Geschwindigkeitsregelung 70 geschaltet. Sie enthält einen Trigger 78, der mit dem Gleichstromformator 73 verbunden ist und der die von dort kommenden Tropfen-Kurzschlußimpulse triggert. Die von dem Trigger 78 abgegebenen Impulse können sich noch in Amplitude und/oder Impulsbreite unterscheiden und werden deshalb einem Normimpulsbildner 79 zugeführt, der aus ihnen Impulse von einheitlicher Form bildet. Das wesentliche Charakteristikum der vom Normimpulsbildner kommenden Impulse ist somit nur noch ihr zeitlicher Abstand, d.h. die Impulsfolge. In einem nachgeschalteten Mittelwertbildner 80 wird sodann der Mittelwert aller Impulse innerhalb eines vorgegebenen Zeitintervalls gebildet. Der entscheidende Schritt der vorliegenden Erfindung besteht nun darin, daß ein Kehrwertbildner 81 vorgesehen ist, der den Kehrwert aus dem Ausgangssignal des Mittelwertbildners 80 bildet. Hat der Mittelwertbildner 80 beispielsweise innerhalb von T Sekunden insgesamt X Tropfen-Kurzschlußimpulse ermittelt, so beträgt die Impulsrate für diesen Zeitraum X/T. Im Kehrwertbildner 81 wird dieser Wert betragsgemäß umgekehrt, d.h. es wird 1/X pro T errechnet. Dieser Kehrwert wird sodann als Istwert einem Verknüpfungselement 82 zugeführt, dem gleichzeitig ein Sollwert, welcher an einem Potentiometer 83 abgegriffen wird, zugeführt wird. Die Differenz zwischen Ist- und Sollwert gelangt hierauf auf einen Tropfenfolgeregler 84, der über den bereits erwähnten Schalter 77 mit der Geschwindigkeitsregelung 70 in Verbindung steht.

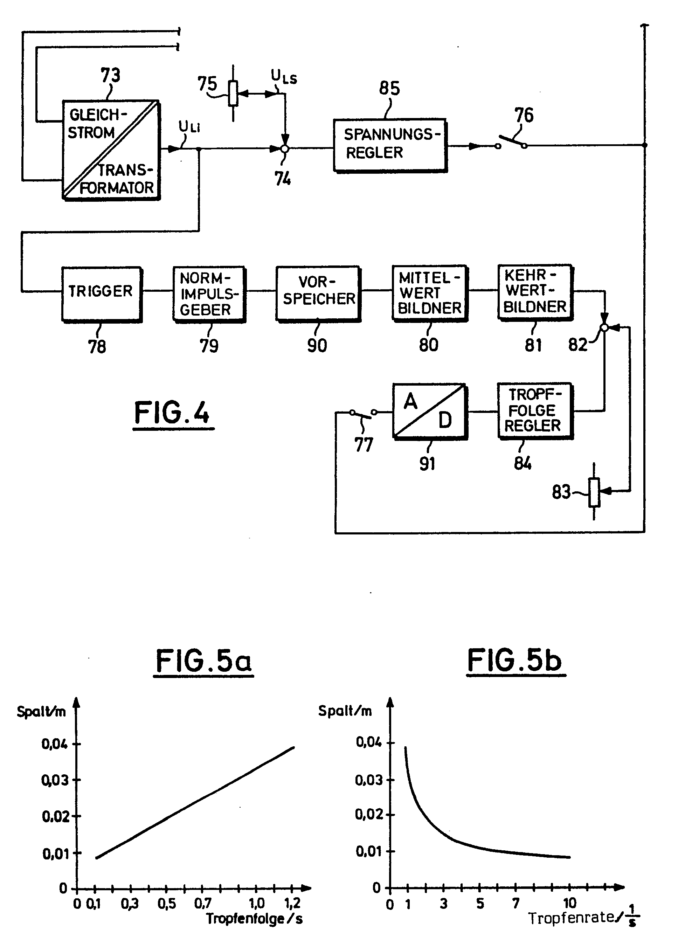

Wie eine Gegenüberstellung der Figuren 2 und 3 zeigt, ergibt sich bei der Anordnung nach Fig. 2 eine nicht-lineare Kreisverstärkung. Durchgeführte Messungen (vergl. z.B. die Meßkurven gemäß Fig. 5 der oben bereits erwähnten US-A-4 578 795) zeigen, daß die mittlere Tropfenfrequenz, d.h. der mittlere Zeitabstand zwischen zwei Tropfen, in etwa eine lineare Funktion der Lichtbogenlänge ist. Da der Kehrwert der Tropfenrate die Tropfenfolge ist, hat die Tropfenrate somit einen hyperbolischen Zusammenhang mit der Lichtbogenlänge (vergl. Fig. 5b). Wird nun ein Regler verwendet, der als Regelgröße die Tropfenhäufigkeit (Rate) — wie Fig. 2 zeigt — verwendet, ergibt sich unter Einbeziehung der Strecke ein Regelkreis mit nicht-konstanter Kreisverstärkung. Um ein Schwingen zu vermeiden, muß die Größe des Regeleingriffes bei einer Abweichung vom Sollwert stark eingeschränkt werden. Es muß also eine kleine Kreisverstärkung gewählt werden. Dies bedeutet eine träge Störgrößen-Regelung mit großen Abweichungen vom Sollwert.

Wird dagegen, wie bei der Anordnung nach Fig. 3, vom Ausgangssignal des Mittelwertbildners 80 der Kehrwert gebildet, so ist das Abweichungssignal proportional zur Streckenabweichung. Die Zeitkonstante und die Kreisverstärkung sind konstant, d.h. der Regler kann optimal eingestellt werden.

In der Fig. 4 ist eine Version der in der Fig. 3 gezeigten Anordnung gezeigt, wobei der obere Bereich weggelassen ist. Man erkennt hierbei, daß lediglich ein Vorspeicher 90 zwischen Normimpulsgeber 79 und Mittelwertbildner 80 sowie ein Digital-Analog-Wandler 11 an den Ausgang des Tropfenfolgenreglers 84 geschaltet sind. Der Vorspeicher 90 summiert alle Impulse auf, die während einer Zykluszeit des digitalen Auswertegeräts auflaufen. Seinen Speicherinhalt liest er an den Mittelwertbildner 80 am jeweiligen Ende der Zykluszeit aus.

Fig. 5a ist eine grafische Darstellung, welche die funktionelle Abhängigkeit zwischen Spaltbreite und Tropfenfolge zeigt, und

Fig. 5b ist eine Darstellung, welche die funktionelle Abhängigkeit zwischen Spaltbreite und Tropfenrate zeigt.

## Patentansprüche

1. Einrichtung zum Regeln des Abstands einer Schmelzelektrode (62) zur Oberfläche des Schmelzguts (61) in einem Vakuumlichtbogenofen, wobei die durch Tropfen entstehenden Kurzschlüsse zwischen der Schmelzelektrode (62) und der Oberfläche des Schmelzguts (61) als Regelkriterium herangezogen werden und ein Tropfenfolgeregler (84) vorgesehen ist, welcher einen elektrischen Antrieb (68) für die Schmelzelektrode (62) steuert, dadurch gekennzeichnet, daß der Tropfenfolgeregler (84) mit einem Signal (aus 82) beaufschlagt wird, das der Differenz zwischen einem ersten und einem zweiten Signal entspricht, wobei

a) das erste Signal ein Tropfenfolge-Istwert-Signal (aus 81) ist, welches in der Weise gebildet wird, daß die Anzahl der innerhalb eines vorgegebenen Zeitintervalls auftretenden Tropfenkurzschlüsse in einem Mittelwertbildner (80) ermittelt und hieraus durch Kehrwertbildung (in 81) der mittlere zeitliche Abstand zwischen zwei Tropfenkurzschlüssen errechnet wird, und wobei

b) das zweite Signal ein Tropfenfolge-Sollwert-Signal (aus 83) ist, das der Sollzeit zwischen zwei aufeinanderfolgenden Tropfenkurzschlüssen entspricht.

2. Einrichtung nach Anspruch 1, dadurch gekennzeichnet, daß diesem Mittelwertbildner (80) ein Norm-Impulsbildner (79) vorgeschaltet ist, der von einem Trigger (78) gesteuert wird, welcher die Tropfenkurzschlußsignale erfaßt.

3. Einrichtung nach Anspruch 1, dadurch gekennzeichnet, daß der erwähnte Tropfenfolgeregler (84) über einen Schalter (77) mit einer Geschwindigkeitsregeleinrichtung (70) verbindbar ist, und daß diese Geschwindigkeitsregeleinrichtung (70) gleichzeitig über einen weiteren Schalter (76) mit einem Spannungsregler (85) für die Lichtbogenspannung verbindbar ist.

4. Einrichtung nach Anspruch 3, dadurch gekennzeichnet, daß die Geschwindigkeitsregeleinrichtung (70) einen Motor (68) steuert, der ein Getriebe (67) antreibt, welches mit einer Halterung (63) der Elektrode (62) verbunden ist.

5. Einrichtung nach Anspruch 2, dadurch gekennzeichnet, daß als Normimpulsbildner (79) eine monostabile Kippstufe (39, 39') vorgesehen ist.

6. Einrichtung nach Anspruch 1, dadurch gekennzeichnet, daß als Mittelwertbildner ein $PT_1$-Glied vorgesehen ist.

7. Einrichtung nach den Ansprüchen 1 und 2, dadurch gekennzeichnet, daß als Mittelwertbildner ein Ringzähler vorgesehen ist, der den Mittelwert über alle in der Ringzeit erfaßten Kurzschlüsse ermittelt.

8. Einrichtung nach den Ansprüchen 1 und 2, dadurch gekennzeichnet, daß der Mittelwertbildner (80), der Kehrwertbildner (81), die Sollwertvorgabe (83) und der erwähnte Tropfenfolgeregler (84) digital arbeiten und die Ausgangsgrößen anschließend in einem Digital-Analog-Wandler in eine analoge Größe für die Ansteuerung des Vorschubmotors gewandelt wird.

9. Einrichtung nach den Ansprüchen 1 und 8, dadurch gekennzeichnet, daß die Signalverarbeitung hybrid, d.h. teils digital, teils analog, erfolgt.

10. Einrichtung nach den Ansprüchen 8 und 9, dadurch gekennzeichnet, daß vor dem Mittelwertbildner (80) ein Vorspeicher (90) gesetzt ist, der alle Impulse während einer Zykluszeit, z.B. 100 ms, des digitalen Auswertegerätes aufsummiert und seinen Speicherinhalt an den Mittelwertbildner (80) am jeweiligen Ende der Zykluszeit ausliest.

## Claims

1. Apparatus for controlling the arc distance between a melting electrode (62) and the surface of melted material (61) in a vacuum arc furnace, wherein short-circuits caused by droplets between the melting electrode (62) and the surface of melted material (61) are utilised as a regulating criterion and a droplet sequence regulator (84) is provided which controls an electric drive means (68) for the melting electrode (62), characterised in that a signal (from 82) acts on the droplet sequence regulator (84) which signal corresponds to the difference between a first and a second signal, wherein

a) the first signal is an actual value signal of the droplet sequence (from 81) which is formed by determining in an averager (80) the number of droplet short-circuits arising within a predetermined time interval and from it by formation of the reciprocal value (in 81) the average time interval between two droplet shortcircuits is computed, and wherein

b) the second signal is a desired value signal of the droplet sequence (from 83) which corresponds to the desired time between two successive droplet short-circuits.

2. Apparatus according to claim 1, characterised in that a standard pulse former (79) is connected in front of this averager (80) and is controlled by a trigger (78) which detects the droplet short-circuit signals.

3. Apparatus according to claim 1, characterised in that the said droplet sequence regulator (84) is connectible via a switch (77) with a speed control device (70), and that this speed control device (70) is at the same time connectible via a further switch (76) with a voltage regulator (85) for the arc voltage.

4. Apparatus according to claim 3, characterised in that the speed control device (70) controls a motor (68) that drives a gear unit (67) which is connected with the mounting (63) of the electrode (62).

5. Apparatus according to claim 2, characterised in that a monostable multivibrator (39, 39') is provided as the standard pulse former (79).

6. Apparatus according to claim 1, characterised in that a $PT_1$ member is provided as the averager.

7. Apparatus according to claims 1 and 2, characterised in that a ring counter is provided as the averager, which determines the average value of all the droplet short-circuits detected in the ring time.

8. Apparatus according to claims 1 and 2, characterised in that the averager (80), the reciprocal value former (81), the desired value setter (83) and the said droplet sequence regulator (84) work digitally and the output values are then converted in a digital-to-analog converter to an analog value for the control of the feed motor.

9. Apparatus according to claims 1 and 8, characterised in that the signal processing takes place in a hybrid manner, i.e. partly digitally, partly in analog manner.

10. Apparatus according to claims 8 and 9, characterised in that a preliminary memory (90) is set in front of the averager (80) which sums all pulses of the digital analysing device during a cycle time, e.g. 100 ms, and reads out the contents of its memory to the averager (80) at the respective end of the cycle time.

## Revendications

1. Dispositif de réglage de l'écartement d'une électrode de fusion (62) par rapport à la surface du produit en fusion (61), dans un four à arc sous vide, les courts-circuits dus aux gouttes, se produisant entre l'électrode de fusion (62) et la surface du produit en fusion (61), étant utilisés comme critère de réglage, et un régulateur de séquence des gouttes (84) étant prévu, qui commande un entraînement électrique (68) pour l'électrode de fusion (62), caractérisé en ce que le régulateur de séquence des gouttes (84) reçoit un signal (provenant de 82) qui correspond à la différence entre un premier et un deuxième signal,

a) le premier signal étant un signal de valeur réelle de séquence des gouttes (provenant de 81) qui est formé de telle sorte que le nombre des courts-circuits dus aux gouttes, se produisant pendant un intervalle de temps donné, est déterminé dans un calculateur de moyenne (80), l'intervalle de temps moyen séparant deux courts-circuits de gouttes étant calculé à partir de cette moyenne, par formation d'une valeur réciproque (dans 81), et

b) le deuxième signal étant un signal de valeur de consigne de séquence de gouttes (provenant de 83) qui correspond au temps de consigne séparant deux courts-circuits de gouttes successifs.

2. Dispositif selon la revendication 1, caractérisé en ce qu'un générateur d'impulsions normalisé (79) est monté en amont de ce calculateur de moyenne (80) et est commandé par un trigger (78) qui enregistre les signaux de courts-circuits de gouttes.

3. Dispositif selon la revendication 1, cáractérisé en ce que le régulateur de séquence de gouttes (84) peut être relié par un commutateur (77), à un dispositif de réglage de vitesse (70) et en ce que ce dispositif de réglage de vitesse (70) peut être en même temps relié à un régulateur de tension (85) pour la tension de l'arc, par un autre commutateur (76).

4. Dispositif selon la revendication 3, caractérisé en ce que le dispositif de réglage de vitesse (70) commande un moteur (68) qui entraîne une transmission (67) qui est reliée à un support (63) de l'électrode (62).

5. Dispositif selon la revendication 2, caractérisé en ce qu'il est prévu comme générateur d'impulsions normalisées (79), une bascule monostable (39, 39').

6. Dispositif selon la revendication 1, caractérisé en ce qu'il est prévu comme calculateur de valeur moyenne, un organe (PT1).

7. Dispositif selon les revendications 1 et 2, caractérisé en ce qu'il est prévu comme calculateur de moyenne un compteur annulaire qui détermine la valeur moyenne relative à tous les courts-circuits enregistrés pendant la durée annulaire.

8. Dispositif selon les revendications 1 et 2, caractérisé en ce que le calculateur de moyenne (80), le générateur de valeur réciproque (81), l'indicateur de valeur de consigne (83) et le régulateur de séquence de gouttes (84) fonctionnent de manière numérique, et en ce que les grandeurs de sortie sont ensuite converties, dans un convertisseur numérique-analogique, en une grandeur analogique pour la commande du moteur d'avance.

9. Dispositif selon les revendications 1 et 8, caractérisé en ce que le traitement des signaux est hybride, c'est-à-dire en partie numérique, en partie analogique.

10. Dispositif selon les revendications 8 et 9, caractérisé en ce qu'une pré-mémoire (90) est placée en amont du calculateur de moyenne (80), et totalise toutes les impulsions pendant une durée de cycle, par exemple 100 millisecondes, de l'appareil d'analyse numérique, et lit le contenu de sa mémoire au calculateur de moyenne (80) à la fin de la durée de cycle considéré.

## FIG.1

## FIG.2

**FIG.3**

**FIG.4**

**FIG.5a**

**FIG.5b**